# EUROPEAN PATENT APPLICATION

(11) **EP 0 884 493 A1**
(43) Date of publication of application: **16.12.1998**
(21) Application number: 98303133.7
(22) Date of filing: 23.04.1998
(51) Int. Cl.: F16D 41/06

(54) **One-way freewheeling clutch with sprags disposed within pockets in the inner or outer race**

(30) Priority: 09.06.1997 US 871481
(71) Applicant: BORG-WARNER AUTOMOTIVE, INC., Sterling Heights, Michigan 48311-8022 (US)
(72) Inventor: Kappler, Brian G., Utica, Michigan 48317 (US)
(74) Representative: Lerwill, John

(57) **Abstract**

A freewheeling one-way clutch assembly (10) is disclosed. The clutch assembly includes an annular outer race (11) having an inner surface (12). An annular inner race (13) having an outer surface (14) is coaxially disposed with said outer race (11). A plurality of sprags (16) having opposed ends (17,18) are spaced circumferentially at predetermined intervals between said inner surface (12) and said outer surface (14). Either the inner surface (12) of the outer race (11) or the outer surface (14) of the inner race (13) defines circumferentially spaced pockets (24) for receiving the sprag ends (17,18). The sprags tilt or pivot within said pockets as the clutch assembly is moved between a freewheel position and a locked position.

## Description

### Technical Field

This invention relates to one-way freewheeling clutches having tiltable sprags disposed between concentric races for automatically controlling torque delivery between a driving member and a driven member.

### Background of the Invention

Conventional freewheeling sprag type clutches include inner and outer concentric races and a plurality of sprags disposed between the races. The prior art freewheeling spray type clutches often include a holder, sometimes referred to as a cage, for mounting the sprags.

United States Patent Nos. 5,139,123 and 5,445,255 disclose prior art sprag type clutches which include inner and outer concentric races. The sprags are tiltable to engage and disengage the concentric clutch races. The sprags tilt to engage and lock the clutch when moving in one direction of rotation and tilt to disengage and allow overrunning or freewheeling of the clutch when moving in an opposite direction.

United States Patent No. 3,515,249 does not disclose a freewheeling clutch as described above, but rather, discloses a sprag clutch having a torque sensitive releasing means. Patent No. 3,515,249 which is not a freewheeling clutch does disclose a releasable coupling member having sockets. Sprag elements are pivotally slideably engaged in the sockets.

### Summary of the Invention

The present invention relates to an improved freewheeling one-way clutch assembly. The clutch assembly includes an outer race having an annular inner surface and an inner race having an annular outer surface coaxially disposed with the outer race. A plurality of sprags having opposed ends are spaced circumferentially at predetermined intervals between the inner surface and outer surface. At least one of the race surfaces defines circumferentially spaced pockets for receiving the sprag ends, whereby the sprags rotate or pivot within the pockets as the clutch is moved between a freewheel position and a locked position.

In some embodiments, one or two cages or holders are provided between the races and hold the sprags. An energizing spring is provided to ensure proper phasing of the sprags.

### Brief Description of the Drawings

Fig. 1 is a perspective view of a freewheeling clutch, according to the present invention;
Fig. 2 is an elevational view, partially in cross-section of a clutch assembly, according to the present invention having a pocketed inner race and no cages;
Fig. 3 is a cross-sectional view taken along the line 3-3 of Fig. 2;
Fig. 4 is an elevational view, partially in section, of another embodiment of a freewheeling one-way clutch assembly, according to the present invention, having a pocketed outer race with an inner cage;
Fig. 5 is a cross-sectional view taken along the line 5-5 of Fig. 4;
Fig. 6 is an elevational view, partially in cross-section of still another embodiment of a freewheeling one-way clutch assembly, according to the present invention, having a pocketed inner race and an outer cage;
Fig. 7 is a cross-sectional view taken along the line 7-7 of Fig. 6;
Fig. 8 is an elevational view, partially in cross-section of a still further embodiment of a freewheeling one-way clutch assembly, according to the present invention, having a pocketed outer race with no cages; and
Fig. 9 is a cross-sectional view taken along the line 9-9 of Fig. 8.

### Detailed Description of the Preferred Embodiments

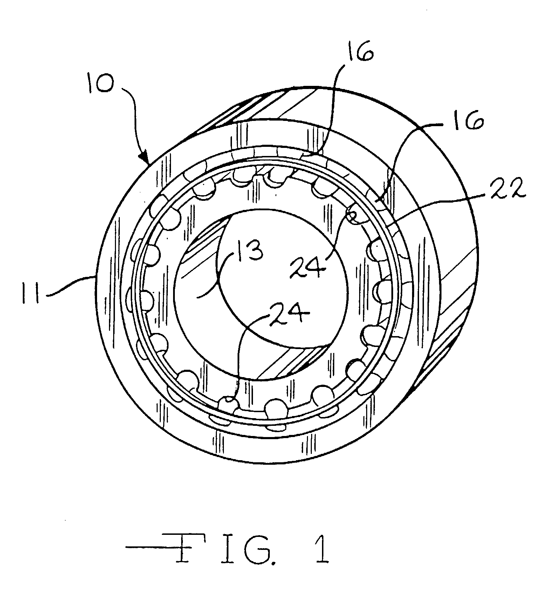

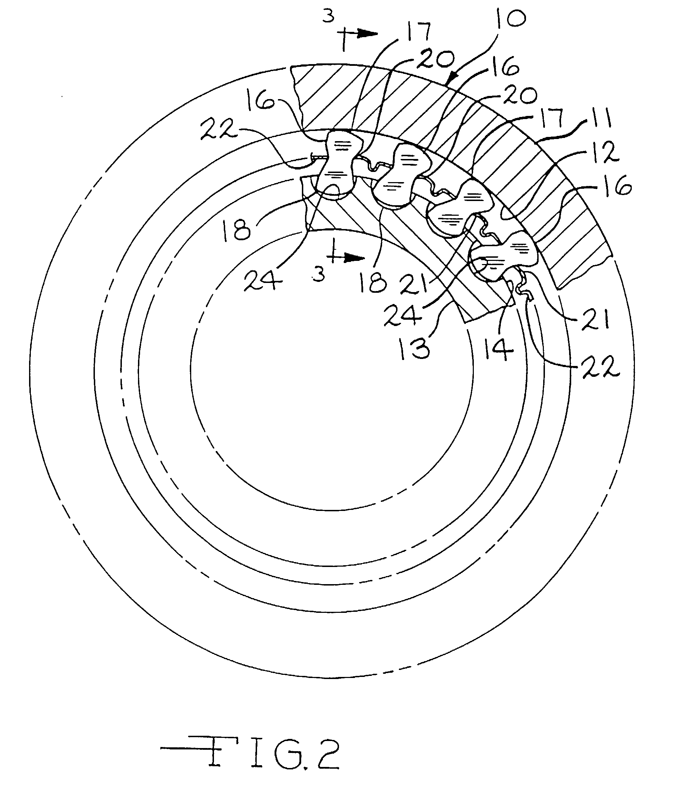

Referring to Figs. 1-3 of the drawings, an improved one-way freewheeling clutch assembly, according to the present invention, is generally indicated by the reference number 10. The clutch assembly 10 includes an outer race 11 having annular inner surface 12 and a concentric inner race 13 having an annular outer surface 14. The annular inner surface 12 of the outer race 11 is radially spaced from the annular outer surface 14 of the inner race 13. A plurality of locking elements or sprags 16 having opposed ends 17 and 18 are spaced circumferentially at predetermined intervals between the inner surface 12 and the outer surface 14. The sprags 16 have a narrowed center section 20 which are received in openings 21 defined in an annular energizing spring 22. In the present embodiment, the energizing spring 22 is a metallic flat ribbon spring. The annular outer surface 14 of the inner race 13 defines a plurality of circumferentially spaced pockets 24 which receive the inner ends 18 of the sprags 16.

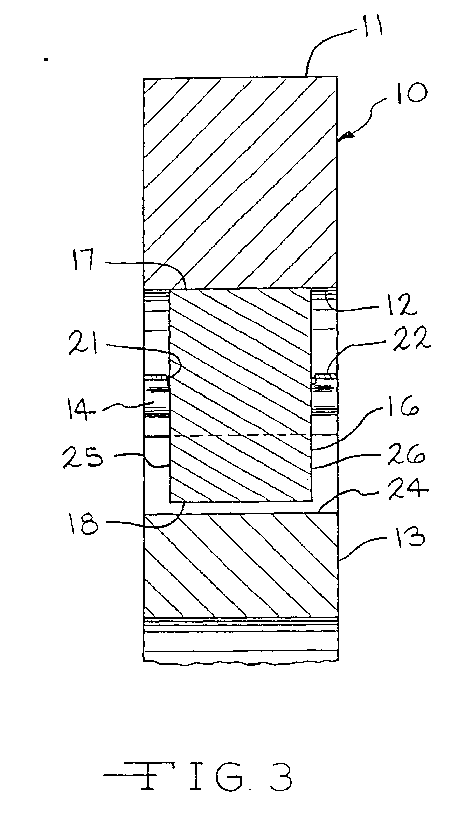

The one-way freewheeling clutch assembly 10, shown in Figs. 1-3, does not include either an outer or an inner cage. As shown in Fig. 3, the sprags 16 have generally flat, parallel side surfaces 25 and 26. The ends 18 of the sprags 16 are generally arcuate and are complimentary with the arcuate shape of the pockets 24. The sprags 16 rotate in the pockets 24 as the sprags are moved between the normal free-wheeling position when the inner and outer races 11 and 13 rotate relative to one another and a locked position where the ends 17 of the sprags 16 are tilted and positioned against the inter surface 12 of the outer race 11 to lock the outer race 11 and the inner race 13 together. The pockets 24 have a shape which allows the sprags 16 to initially move slightly to position themselves properly within the pockets 24. It has been found that the pockets 24 guide the sprags 16 wherein the sprags 16 travel with the pocketed race. In the Figs. 1-3 embodiment the sprags 16 travel with the inner race 13.

The pockets 24 with the inner race 13 are forged, cast or machined. In most embodiments, the pockets 16 can be formed without a secondary grinding operation. The elimination of a secondary grinding or machining operation together with the reduction in the number of components, as compared to prior art one-way freewheeling clutch assemblies, is an advantage. In a preferred embodiment of the clutch assembly 10, ring shaped end bearings (not shown) are provided between the races 11 and 13 in a position spaced from the sprags 16 and the energizing spring 22.

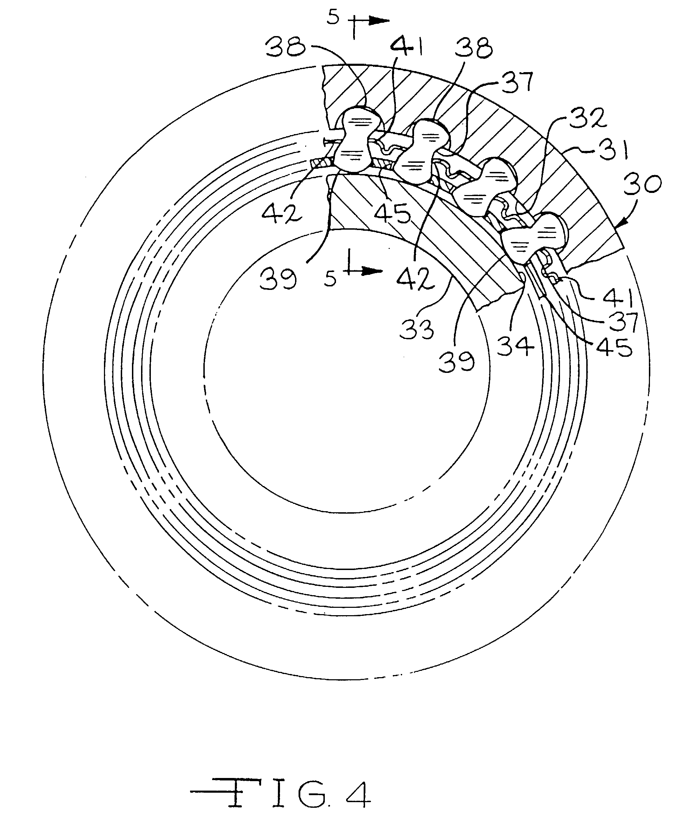

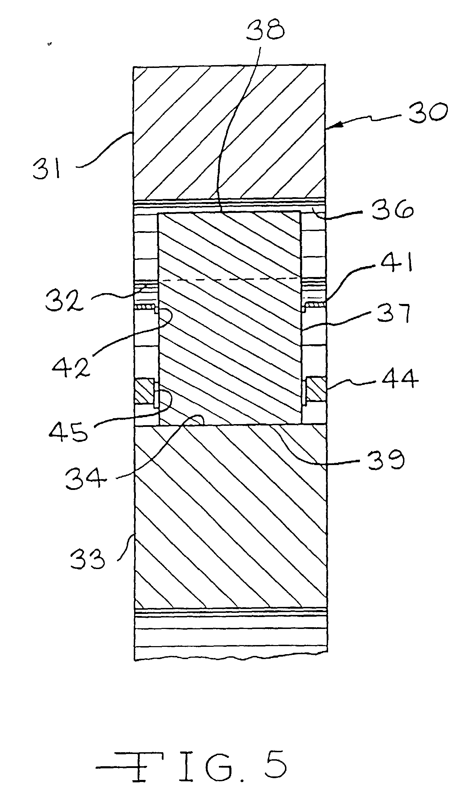

Another embodiment of a one-way freewheeling clutch assembly is generally indicated in Figs. 4 and 5 by the reference number 30. The clutch assembly 30 includes an outer race 31 having an annular inner surface 32. The clutch assembly 30 also includes an inner race 33 having an annular outer surface 34 which is concentric with and radially spaced from the inner surface 32 of the outer race 31.

The outer race 31 of the clutch assembly 30 defines a plurality of circumferentially spaced pockets 36 in its inner surface 32. A plurality of sprags 37 having opposed ends 38 and 39 are spaced circumferentially at predetermined intervals between the inner surface 32 of the race 31 and the outer surface 34 of the race 33. An energizing spring 41, in this embodiment a metallic ribbon spring, defines openings 42 which receive the narrowed portions of the sprag 37. An annular inner cage 44 defines circumferentially spaced and axially extending slots 45 which receive and hold the ends 39 of the sprags 37. The opposed ends 38 of the sprags 37 are received by the pockets 36 and rotate in the pockets 36. As the outer race 31 having the packets 36 rotate, the clutch assembly 10 rotates in the direction of that race.

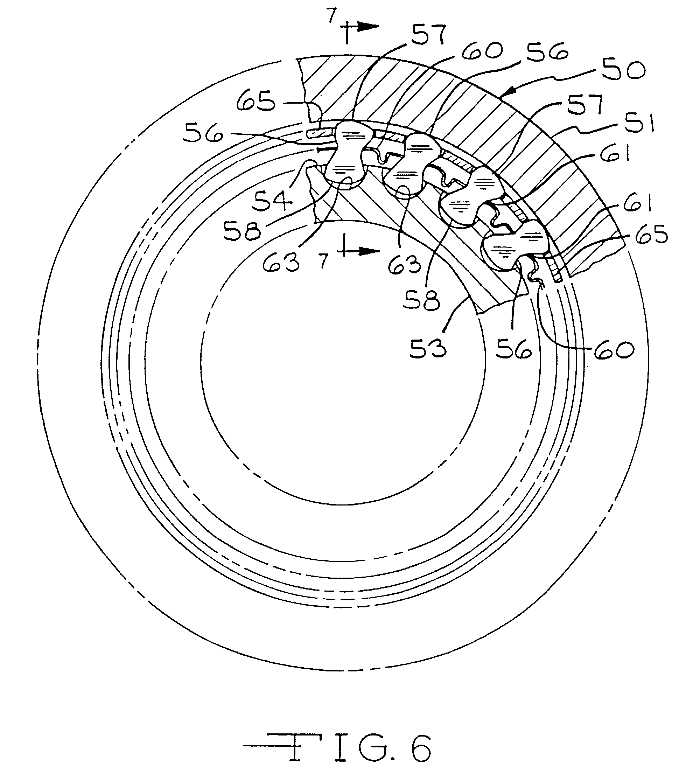

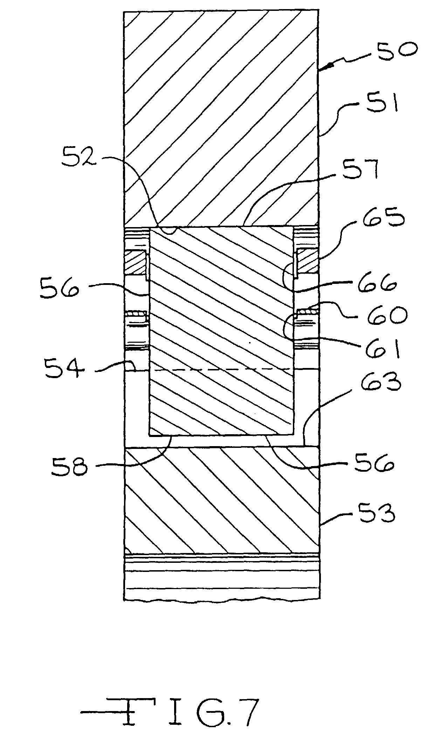

A still further embodiment of a one-way freewheeling clutch assembly, according to the present invention, is generally indicated in Figs. 6 and 7 by the reference number 50. The clutch assembly 50 includes an outer race 51 having an annular inner surface 52. An inner race 53 has an annular outer surface 54 which is radially spaced from the inner surface 52 of the outer race 51. A plurality of locking elements or sprags 56 having opposed ends 57 and 58 are spaced circumferentially at predetermined intervals between the inner surface 52 and the outer surface 54. The sprags 56 serve as locking elements as the clutch assembly 50 is moved between its freewheeling position where the outer race 51 and inner race 53 rotate relative to one another and a locked position were the races 51 and 53 are locked together.

An annular energizing spring 60, in this embodiment a ribbon spring, has openings 61 which receive a narrowed portion of the sprags 56. The sprags 56 have generally flat and parallel side edges as shown in Fig. 7.

In the present embodiment, the annular outer surface 54 of the inner race 53 defines a plurality of circumferentially spaced pockets 63 having a generally arcuate cross-section. The pockets receive the arcuate and complementary shaped ends 58 of the sprags 56. The sprags 56 pivot or rotate within the pockets 63. In the present embodiment, an annular outer cage 65 having slots 66 is positioned in the space between the races 51 and 53. The slots 66 receive and hold the ends 57 of the sprags 56.

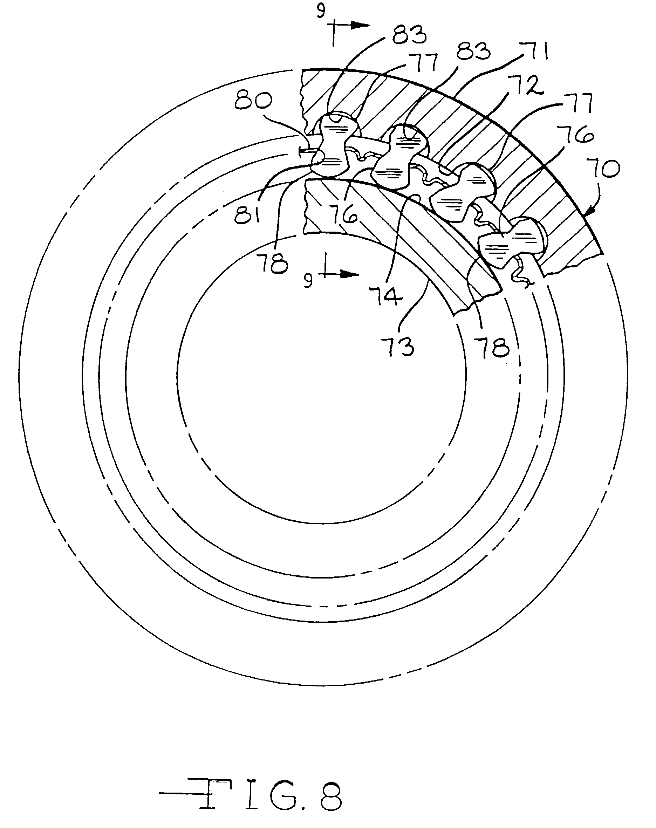

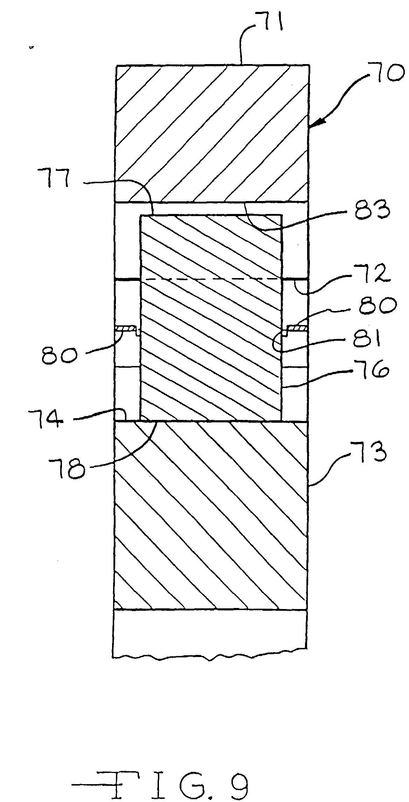

A still further embodiment of a one-way freewheeling clutch assembly, according to the present invention, is generally indicated in Figs. 8 and 9 by the reference number 70. The clutch assembly 70 includes an annular outer race 71 having an inner surface 72. An inner race 73 having an annular outer surface 74 is coaxially disposed with the outer race 71. A plurality of locking elements or sprags 76 having opposed ends 77 and 78 are circumferentially spaced at predetermined intervals between the inner surface 72 and outer surface 74. An annular energizing spring 80 having openings 81 is positioned between the races 71 and 73. The openings 81 receive narrowed portions of the sprags 76. In the present embodiment, the inner surface 72 of the outer race 71 defines a plurality of spaced pockets 83 having a generally arcuate cross-sections. The pockets 83 receive complementary arcuate ends 77 of the sprags 76. The sprags 76 rotate within the pockets 83 as the clutch assembly 70 is moved between its freewheel position and its locked position.

Many revisions to the above described embodiments of the invention may be made without departing from the scope of the invention or from the following claims.

## Claims

1. A freewheeling one-way clutch assembly (12,30,50,70) comprising an outer race (11,31,51,71) having an annular inner surface (12,32,52,72), an inner race (13,33,53,73) having an annular outer surface (14,34,54,74) and coaxially disposed with said outer race (11,31,51,71), a plurality of sprags (16,37,56,76) having opposed ends (17-18,38-39,57-58,77-78) spaced circumferentially at a predetermined interval between said inner surface (12,32,52,72) and said outer surface (14,34,54,74), at least one of said surfaces (12-14,32-34,52-54,72-74) defining circumferentially spaced pockets (24,36,63,83) for receiving said sprag ends (17-18,38-39,57-58,77-78), whereby said sprags tilt within said pockets as said clutch assembly is moved between a freewheel position and a locked position.

2. A freewheeling one-way clutch assembly (10,30,50,70), according to claim 1, wherein said pockets (24,36,63,83) have an arcuate cross-section and said sprag ends (18,38,58,77) have a complementary cross-section, wherein when said sprag ends are received by said pockets said sprags (16,37,56,76) move slightly to position themselves properly within said pockets.

3. A freewheeling one-way clutch assembly (10,30,50,70), according to claim 1, including a spring (22,41,60,80) connected to said sprags (16,37,56,76).

4. A freewheeling one-way clutch assembly (10,30,50,70), according to claim 3, wherein said spring (22,41,60,80) is an annular ribbon spring defining openings (21,42,61,81) for receiving said sprags (16,37,56,76).

5. A freewheeling one-way clutch assembly (10,30,50,70), according to claim 2, wherein said sprags have flat, parallel side edges (25-26).

6. A freewheeling one-way clutch assembly (10,50), according to claim 2, wherein said pockets (24,63) are defined by said outer surface (14,54) of said inner race (13,53).

7. A freewheeling one-way clutch assembly (50), according to claim 6, including an annular outer cage (65) defining slots (66) for receiving said sprags (56).

8. A freewheeling one-way clutch assembly (30,70), according to claim 2, wherein said pockets (36,83) are defined by said inner surface (32,72) of said outer race (31,71).

9. A freewheeling one-way clutch assembly (30), according to claim 8, including an annular inner cage (44) defining slots (45) for receiving said sprags (37).
